# EUROPÄISCHE PATENTSCHRIFT

(11) **EP 1 327 796 B1**
(45) Veröffentlichungstag und Bekanntmachung des Hinweises auf die Patenterteilung: **02.04.2008**
(21) Anmeldenummer: 02000571.6
(22) Anmeldetag: 10.01.2002
(51) Int. Cl.: F16G 5/16

(54) **Hybridkeilriemen-Anordnung**
Composite V-belt
Courroie trapezoidale composite

(43) Veröffentlichungstag der Anmeldung: 16.07.2003
(73) Patentinhaber: ContiTech Antriebssysteme GmbH, 30165 Hannover (DE)
(72) Erfinder: Sattler, Heiko, Dr., 30175 Hannover (DE)
(74) Vertreter: Finger, Karsten

(56) Entgegenhaltungen:
- EP-A- 0 305 023
- US-A- 4 457 742
- US-A- 5 152 722
- PATENT ABSTRACTS OF JAPAN vol. 1996, no. 03, 29. März 1996 (1996-03-29) -& JP 07 305745 A (AICHI MACH IND CO LTD;OTHERS: 01), 21. November 1995 (1995-11-21)
- PATENT ABSTRACTS OF JAPAN vol. 2000, no. 21, 3. August 2001 (2001-08-03) -& JP 2001 090786 A (BANDO CHEM IND LTD), 3. April 2001 (2001-04-03)

## Beschreibung

### Hybridkeilriemen-Anordnung

Die Erfindung betrifft eine aus Hybridkeilriemen und Riemenscheibe(n) bestehende Keilriemenanordnung nach der Gattung des Hauptanspruchs, siehe z.B. JP-A-07-305 745.

### Stand der Technik

Im Eingriff befindliche Umschlingungsmittel erzeugen infolge mit ihrer Bewegung periodisch wiederkehrender geometrischer Formen Geräusche, deren Frequenzen sich für das menschliche Ohr in auffälligen und unangenehmen tonalen Komponenten des Laufgeräusches bemerkbar machen.

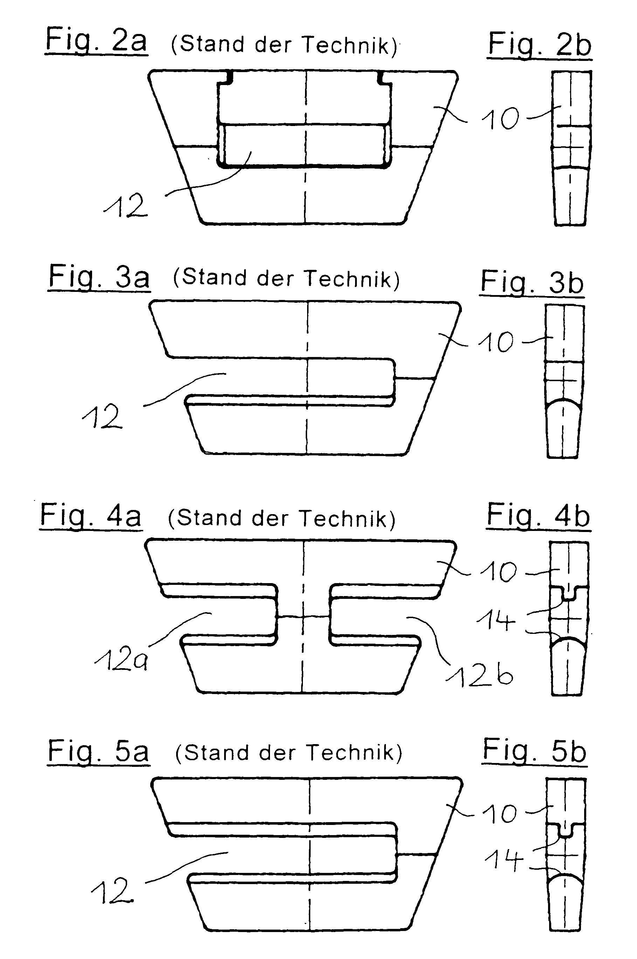

Leistungsstarke Hybridkeilriemen bestehen aus Zugträgern zur Aufnahme der Arbeitskräfte in Riemenlängsrichtung sowie aus Stützelementen verschiedener möglicher Bauformen (Fig. 2 bis Fig. 5, jeweils Vorder- und Seitenansicht). Die Stützelemente sind als vollständig umschließende (Fig. 2) oder geschlitzte Elemente (Fig. 3 bis Fig. 5) ausgeführt, die einen (Fig. 2, Fig. 3, Fig. 5) oder zwei Zugträger (Fig. 4) aufnehmen. Das zu übertragende Drehmoment wird kraftschlüssig von einer Antriebsscheibe mit keilförmiger Rille auf das Umschlingungsmittel und von diesem in gleicher Weise auf die Abtriebsscheibe übertragen. Die Stützelemente dienen dabei der Erhöhung der Quersteifigkeit des Hybridriemenverbundes und nehmen die axialen Anpresskräfte von den Flanken der Scheiben auf.

Während des Betriebes gelangen die Stützelemente, die durch Formschluss mit gezahnten Zugträgern oder durch Kraftschluss bzw. Klemmung mit glatten Zugträgern verbunden sind, infolge der Umlaufgeschwindigkeit des Riemens wiederholt und in regelmäßigen Abständen in Kontakt mit den Antriebs- und Abtriebsscheiben und in Kontakt untereinander, wodurch die genannten störenden tonalen Geräuschkomponenten entstehen.

### Aufgabe, Lehre und Vorteile der Erfindung

Bei der gattungsgemäßen Anordnung mit den kennzeichnenden Merkmalen des Hauptanspruchs wird ein gleichmäßig wiederkehrendes Anschlagen der einzelnen Stützelemente auf die Scheibenflanken vermieden.
Durch die in den Unteransprüchen aufgeführten Maßnahmen sind vorteilhafte Weiterbildungen und Verbesserungen der im Hauptanspruch angegebenen Konstruktion möglich.

Aus dem Bereich der Schubgliederbänder ist ein vergleichbares Geräusch-Problem bekannt (siehe EP-A-305 023):
Ähnlich wie Hybridkeilriemen weisen Schubgliederbänder Zugträger auf, die mit Hilfe zahlreicher darauf angebrachter Stützelemente eine Querverstärkung erfahren. Im Unterschied zu Hybridriemen, bei denen die Stützelemente durch Formschluss mit gezahnten Zugträgern bzw. durch Klemmung mit glatten Zugträgern verbunden sind, sind bei Schubgliederbändern die einzelnen Stützelemente lose auf die Zugträger aufgesteckt. Gemäß der EP-A-305 023 wird das auch bei Schubgliederbändern bekannte Geräuschproblem in der Weise gelöst, dass man auch dort bestrebt ist, ein gleichmäßig wiederkehrendes Anschlagen der einzelnen Stützelemente auf die Scheibenflanken zu vermeiden. Aufgrund der Tatsache, dass bei Schubgliederbändern die Stützelemente nur lose auf den Zugträgern angebracht und somit in Längsrichtung des Riemens frei verschieblich sind, schlägt die EP-A-305 023 zur Verringerung der subjektiv empfundenen Geräuschbelästigung vor, Stützelemente mit variabler Dicke und/oder auf die Stützelemente aufgebrachte Lamellen unterschiedlicher Stärke zu verwenden.
Die Verwendung von Stützelementen variabler Stärke ist bei Schubgliederbändern, bei denen die Stützelemente längsverschieblich sind, ohne weiteres möglich, bei Hybridriemen mit vorzugsweise fest vorgegebener Längsteilung aber nicht.

Erfindungsgemäß wird die Regelmäßigkeit der Kontaktnahme aufeinanderfolgender Stützelemente mit den Scheiben und der Stützelemente untereinander - zur Minderung der tonalen Komponenten im Laufgeräusch - dadurch gestört, dass das Auftreffen aufeinanderfolgender Stützelemente auf die Scheibenflanken ungleichmäßig erfolgt.

Die vorliegende Erfindung realisiert die angestrebte Ungleichmäßigkeit des Auftreffens der einzelnen Stützelemente auf die Scheibenflanken auch bei Stützelementen konstanter Stärke bzw. Hybridriemen mit konstanter Teilung durch eine unterschiedliche Ausformung der Stützelemente nach dem kennzeichen des Hauptanspruchs.

Außer durch einseitige oder zweiseitige und/oder durch symmetrische oder unsymmetrische Veränderung der Grundkörperausbildung kann die variierende Auftrefffolge der Stützelemente zusätzlich durch eine in Laufrichtungzusätzlich aufgebrachte Schicht verwirklicht werden.
Durch Aufbringen von speziell geformten Schichtelementen ergibt sich somit eine zusätzliche Möglichkeit, das Spektrum der Auftrefffrequenz zu verbreitern.

Weiterhin kann die Geräuschbildung zusätzlich minimiert werden, indem die zusätzlich aufgebrachte Schicht an in Laufrichtung Vorder- oder Rückseite aus stark bedämpfendem Material - im Vergleich zum Grundkörper - hergestellt ist.

Sind die Schichtelemente nicht nur unterschiedlich geformt sondern ist das für die Schichtelemente gewählte Material außerdem stark dämpfend, so ergibt sich damit nicht nur eine Verbreiterung des Spektrums der Aufschlagfrequenz und damit eine subjektive Verminderung der Geräuschbelästigung sondern - durch die Dämpfung- auch eine objektive Verringerung des Geräuschpegels der auf die Scheibenflanken und aufeinander auftreffenden Stützelemente.

Die zusätzliche Schicht kann durch Stoffschluss (Kleben, Vulkanisation) oder durch formschlüssige Elemente an Schicht und Grundkörper an mindestens einer der vier Flächen an Vorder- oder Rückseite angebracht werden. Die Stärke der zusätzlichen Schicht kann zusätzlich über der radialen Ausdehnung variieren.

### Zeichnungen

Ausführungsbeispiele der Erfindung sind in den Zeichnungen dargestellt und in der nachfolgenden Beschreibung näher erläutert.
Es zeigt:
Fig. 1a ausschnittsweise einen Querschnitt durch eine aus Hybridkeilriemen und Riemenscheibe bestehende Keilriemenanordnung; und
Fig. 1b einen Schnitt durch einen aus Stützelement und Zugträger bestehenden Hybridkeilriemen über die Länge eines einzigen Stützelementes.
Fig. 2 bis Fig. 5 zeigen Ausführungsformen von Stützelementen gemäß dem Stand der Technik, und zwar:
Fig. 2 als vollständig umschließende und
Fig. 3 bis Fig. 5 als geschlitzte Stützelemente;
Fig. 2, Fig. 3 und Fig. 5 zur Aufnahme von *einem* Zugträger und
Fig. 4 zur Aufnahme *zweier* Zugträger.
Es zeigt:

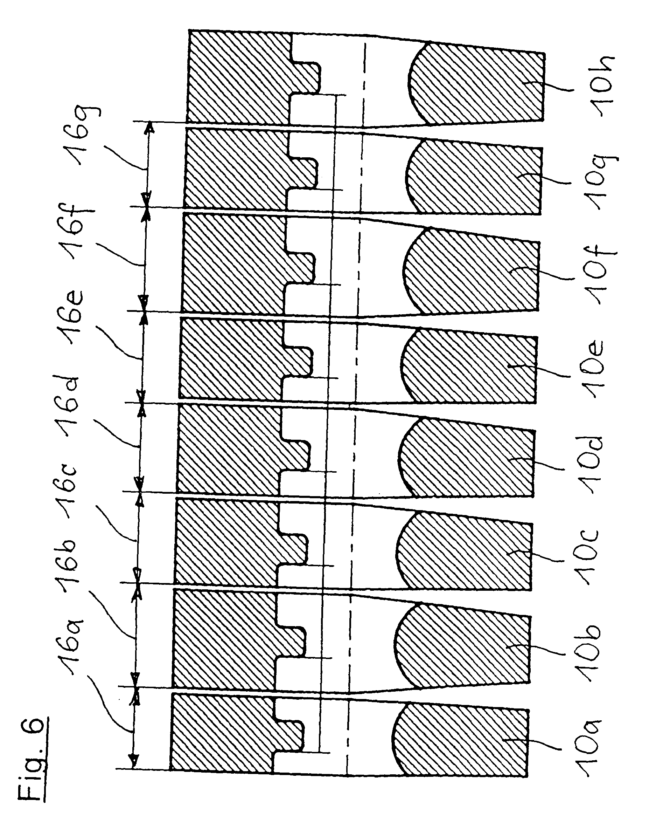

Fig. 6 eine Reihe erfindungsgemäßer Stützelemente unterschiedlicher Stärke (Schnitt in Riemenlängsrichtung);

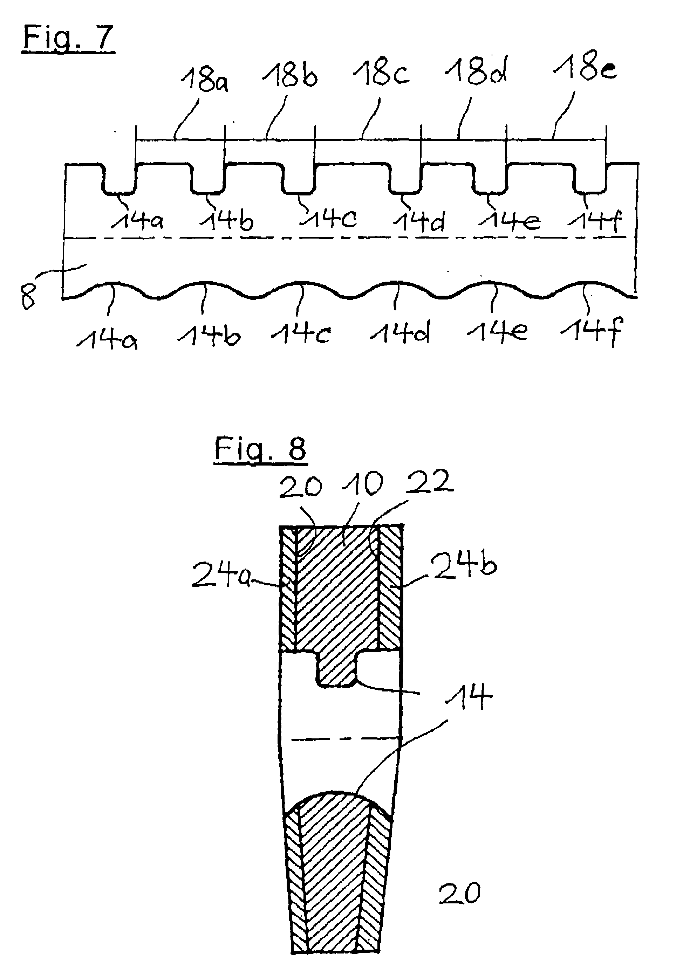

Fig. 7 einen Abschnitt aus einem nicht erfindungsgemäßen Zugträger, d.h. mit variabler Teilung;
Fig. 8 ein Stützelement in Seitenansicht (bzw. Schnitt in Riemenlängsrichtung) mit auf (in Laufrichtung) Vorder- und Rückseite angebrachter Schicht; und

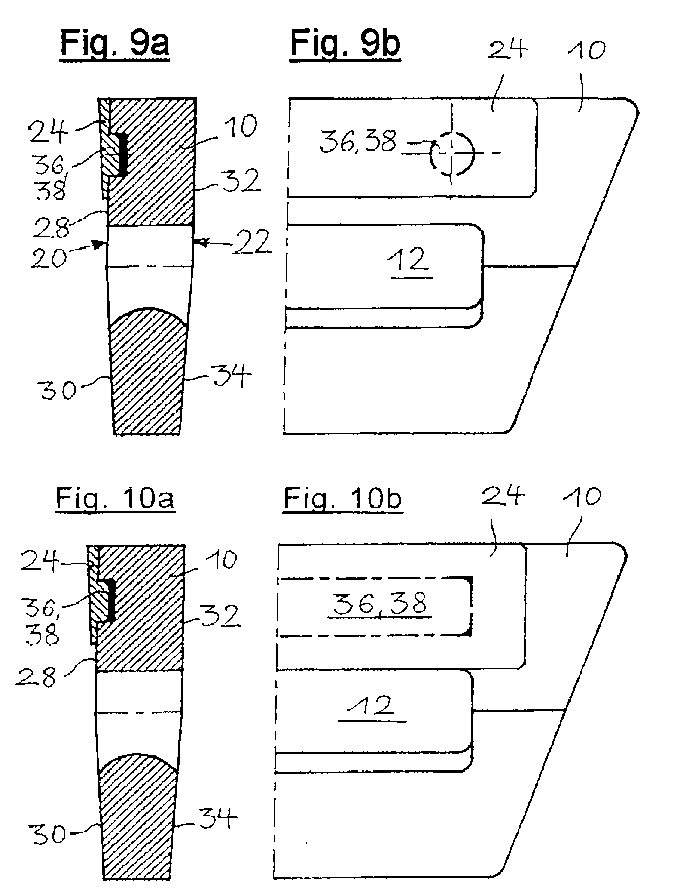

Fig. 9a, Fig. 9b und Fig. 10a, Fig. 10b zeigen zwei Stützelemente mit formschlüssigen Elementen an Schicht und Grundkörper, jeweils in Seitenansicht und von vorn.

### Beschreibung der Erfindung

Üblicherweise bestehen auf Riemenscheiben 6 laufende Hybridkeilriemen 4 aus einem 8 oder zwei endlosen Zugträger(n) 8a, 8b worauf Stützelemente (Stützblöcke) 10, 10a, 10b, ... angeordnet sind (Stand der Technik: Fig. 2 bis Fig. 5). Dabei ist der 8 (bzw. sind die) Zugträger 8a, 8b in einem 12 (bzw. in zwei) seitlichen Schlitz(en) 12a, 12b geführt. Zur Verbesserung der Positionierung der Stützelemente gegenüber dem Zugträger weisen sowohl die Stützelemente 10, 10a, 10b ... als auch der 8 (oder die) Zugträger 8a, 8b Erhebungen und Vertiefungen oder Prägungen 14, 14a, 14b, ... auf.

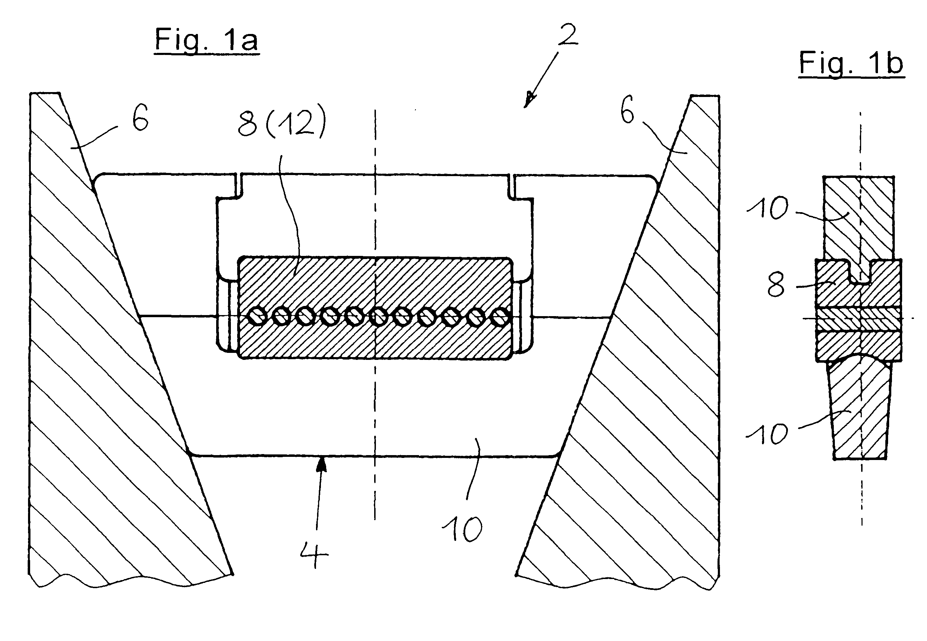

Die in Fig. 1 a ausschnittsweise dargestellte Keilriemenanordnung 2 besteht aus einem Hybridkeilriemen 4 und einer Riemenscheibe 6, wobei der Hybridkeilriemen 4 im vorliegenden Fall aus einem (endlosen) Zugträger 8 und darauf angeordneten Stützelementen 10 besteht, die sich auf den Rillenflanken der Riemenscheibe 6 abstützen. Der Grundaufbau der Stützelemente 10 ist vergleichbar der Ausführungsform gemäß Fig. 2a. Fig. 1b zeigt den diesbezüglichen Längsschnitt durch Stützelement 10 und Zugträger 8.

Während des Betriebs der Riemenanordnung treten bei der Ineingriffnahme der mit Stützelementen querversteiften Lastträger 8 auf die Riemenscheibe 6 periodisch wiederkehrende Auftreffgeräusche sowohl zwischen den einzelnen Stützelementen 10, 10a, 10b, ... untereinander als auch zwischen den Stützelementen 10, 10a, 10b, ... und der (den) Riemenscheibe(n) 6 auf.

Anhand der Fig. 6 bis Fig. 10a/b werden die verschiedenen Maßnahmen zur Reduzierung der Auftreffgeräusche beschrieben.

Fig. 6 zeigt eine Anzahl aneinandergereihter Stützelemente (10a, 10b, ...) die durch einseitige oder zweiseitige, symmetrische oder unsymmetrische Veränderung der Grundkörperstärker der Stützelemente in Laufrichtung charakterisiert ist, so dass bei gleichbleibendem Abstand der Vertiefungen oder Prägungen am Zugträger in Laufrichtung eine variierende Abstandsfolge 16a, 16b, ... von Stützelementen entsteht.

Anhand der Fig. 7 wird demonstriert, dass aufgrund voneinander unterschiedlich beabstandeter, auf dem Lastträger 8 angeordneter Vertiefungen oder Prägungen (Teilungen) 14, 14a, 14b, ... auf einfache Weise bei konstanter Riemengeschwindigkeit eine zeitlich variierende Abstandsfolge von in eine Riemenscheibe einlaufenden Stützelementen 10, 10a, 10b, ... realisiert wird.

Das in Fig. 8 dargestellte Stützelement 10 weist auf in Laufrichtung Vorder- und Rückseite eine Beschichtung auf. Durch Verwendung unterschiedlich dicker Materialien kann eine Vorne-Hinten-Asymmetrie realisiert werden, wodurch sich die tonale Komponente des Auftreffgeräusches vermindert.

Eine weitere Maßnahme zur Verringerung der Geräuschbelästigung besteht in der Verwendung von Beschichtungsmaterial mit dämpfenden Eigenschaften. Für eine Beschichtung stehen auf dem Stützelement 10 vier Teilflächen 28, 30, 32, 34 zur Verfügung: vorne oben 28, vorne unten 30, hinten oben 32 und hinten unten 34.

Fig. 9a/9b zeigt ein auf der vorderen oberen Teilfläche 28 angeordnetes dämpfendes Schichtelement 24, das formschlüssig mit dem Grundkörper des Stützelementes 10 verbunden ist, indem zwei am Schichtelement 24 vorspringende zylindrische Erhebungen 36 in korrespondierende Vertiefungen 38 des Grundkörpers eingepasst sind.

Fig. 10a/10b stellt ebenfalls ein beispielsweise auf der vorderen oberen Teilfläche 28 angeordnetes dämpfendes Schichtelement 24 dar, das mittels einer Erhebung 36 eckigen Querschnittes und korrespondierender Vertiefung 38 im Grundkörper verbunden ist.

### Bezugszeichenliste

- 2: Keilriemenanordnung
- 4: Hybridkeilriemen
- 6: Riemenscheibe
- 8, 8a, 8b: Zugträger (Lastträger)
- 10, 10a, 10b, ...: Stützelement (Stützblock)
- 12, 12a, 12b: Schlitz (im Stützelement)
- 14, 14a, 14b,: Vertiefung(en), Prägung(en) (Teilungen)
- 16a, 16b,: Abstandsfolge (Grundkörperstärke)
- 18a, 18b,: Beabstandung (der Stützelemente voneinander)
- 20: Vorderseite des Stützelements
- 22: Rückseite des Stützelements
- 24, 24a, 24b, ...: Schichtelement
- 28, 30: Fläch en (oben, unten) an Vorderseite
- 32, 34: Fläch en (oben, unten) an Rückseite
- 36: Erhebung
- 38: Vertiefung

## Patentansprüche

1. Aus einem Hybridkeilriemen (4) und mindestens einer Riemenscheibe (6) bestehende Keilriemenanordnung (2),
wobei der Hybridkeilriemen (4) eine Vielzahl von Stützelementen (10a, 10b, ...) aufweist, die jeweils mit mindestens einem Schlitz (12 bzw. 12a, 12b, ...) zur Aufnahme mindestens eines Zugträgers (8, bzw. 8a, 8b) versehen sind,
wobei der Zugträger (8 bzw. 8a, 8b) als Zahnriemen mit einer konstanten Zahnteilung ausgebildet ist und
die Stützelemente Prägungen (14, 14a...) aufweisen, die über korrespondierende Zähne des mindestens einen Zugträgers (8 bzw. 8a, 8b) greifen,
wobei die Folge der mit der mindestens einen Riemenscheibe (6) in Eingriff gelangenden Stützelemente (10a, 10b, ...) eine in Umlaufrichtung der mindestens einen Riemenscheibe (6) variable Frequenz aufweist
**dadurch gekennzeichnet,**
**daß** die variable Folge der auf die Riemenscheibenflanken auftreffenden Stützelemente (10a, 10b, ...) durch unterschiedliche Grundkörperstärken der Stützelemente (10a, 10b, ...) realisiert ist, und
**dass** die unterschiedlichen Grundkörperstärken von der Prägung aus gesehen durch einseitige oder zweiseitige oder durch symmetrische oder unsymmetrische Unterschiedlichkeit der in Laufrichtung gegebenen Längsschnitte aufeinanderfolgender Stützelemente (10a, 10b, ...) erzielt ist.

2. Keilriemenanordnung nach Anspruch 1,
**dadurch gekennzeichnet,**
**dass** die Stützelemente (10a, 10b, ...) in Laufrichtung Vorder- (20) und/oder Rückseite (22) mit Schichtelementen (24 bzw. 24a, 24b) aus stark bedämpfendem Material beschichtet sind.

3. Keilriemenanordnung nach Anspruche 1 oder 2,
**dadurch gekennzeichnet,**
**dass** auf der vorderen oberen Teilfläche (28) ein dämpfendes Schichtelement (24) angeordnet ist, das formschlüssig mit dem Grundkörper des Stützelementes (10) verbunden ist, indem zwei am Schichtelement (24) vorspringende Erhebung (36) in korrespondierende Vertiefungen (38) des Grundkörpers eingepasst sind.

4. Keilriemenanordnung nach Anspruch 3, **dadurch gekennzeichnet,**
**dass** die auf dem Schichtelement (24) vorspringenden Erhebungen (36) und die im Grundkörper dazu korrespondierenden Vertiefungen (38) jeweils zylindrischen oder eckigen Querschnitt aufweisen.

5. Keilriemenanordnung nach einem der Ansprüche 2 bis 4,
**dadurch gekennzeichnet,**
**dass** die auf den Stützelementen (10a, 10b, ...) jeweils angeordneten Schichtelemente (24 bzw, 24a, 24b) durch Stoffschluss (Kleben, Vulkanisation) an mindestens einer der vier an Vorder- (20) und/oder Rückseite (22) der Stützelemente (10a, 10b, ...) befindlichen Flächen (28, 30, 32, 34) angebracht werden.

## Claims

1. V belt arrangement (2) composed of a hybrid V belt (4) and at least one pulley (6),
where the hybrid V belt (4) has a plurality of support elements (10a, 10b, ...) which are each provided with at least one slot (12, 12a, 12b, ...) for holding at least one tensile load-bearing element (8, 8a, 8b),
wherein the tensile load-bearing element (8, 8a, 8b) is embodied as a toothed belt with a constant tooth pitch, and
the support elements have indents (14, 14a, ...) which engage over corresponding teeth of the at least one tensile load-bearing element (8, 8a, 8b),
wherein the sequence of the support elements (10a, 10b, ...) which engage with the at least one pulley (6) has a variable frequency in the rotational direction of the at least one pulley (6), **characterized in that** the variable sequence of the support elements (10a, 10b, ...) which impact on the pulley edges is implemented by different base body thicknesses of the support elements (10a, 10b, ...), and **in that** the different base body thicknesses, viewed from the indent, are achieved by one-sided or two-sided or by symmetrical or asymmetrical differences in the longitudinal sections of successive support elements (10a, 10b, ...) in the running direction.

2. V belt arrangement according to Claim 1, **characterized in that** the support elements (10a, 10b, ...) are layered on the front side (20) and/or rear side (22) in the running direction with layer elements (24, 24a, 24b) made of heavily damping material.

3. V belt arrangement according to Claims 1 or 2, **characterized in that** arranged on the front upper part face (28) is a damping layer element (24) which is connected in a positively locking fashion to the base body of the support element (10) by virtue of the fact that two projections (36) which protrude from the layer element (24) are fitted into corresponding depressions (38) on the base body.

4. V belt arrangement according to Claim 3, **characterized in that** the projections (36) which protrude from the layer element (24) and the depressions (38) which correspond thereto in the base body each have a cylindrical or polygonal cross section.

5. V belt arrangement according to one of Claims 2 to 4, **characterized in that** the layer elements (24, 24a, 24b) which are each arranged on the support elements (10a, 10b, ...) are attached through a materially joined connection (bonding, vulcanisation) to at least one of the four faces (28, 30, 32, 34) which are located on the front side (20) and/or rear side (22) of the support elements (10a, 10b, ...).

## Revendications

1. Agencement de courroie trapézoïdale (2) constitué d'une courroie trapézoïdale composite (4) et d'au moins une poulie à courroie (6),
dans lequel la courroie trapézoïdale composite (4) présente une pluralité d'éléments de support (10a, 10b, ...) qui sont pourvus à chaque fois d'au moins une fente (12, respectivement 12a, 12b, ...) pour recevoir au moins un support de traction (8, respectivement 8a, 8b, ...),
le support de traction (8, respectivement 8a, 8b, ...), étant réalisé sous forme de courroie dentée avec une division de dents constante, et les éléments de support présentant des marquages (14, 14a...), qui viennent en prise par le biais de dents correspondantes de l'au moins un support de traction (8, respectivement 8a, 8b, ...),
la succession des éléments de support (10a, 10b, ...) arrivant en prise avec l'au moins une poulie à courroie (6) présentant une fréquence variable dans la direction périphérique de l'au moins une poulie à courroie (6),
**caractérisé en ce que**
la succession variable des éléments de support (10a, 10b, ...) arrivant sur les flancs de la poulie à courroie étant réalisée par des épaisseurs différentes des corps de base des éléments de support (10a, 10b, ...) et
**en ce que** les différentes épaisseurs des corps de base est obtenue, du point de vue du marquage, par une différence d'un côté ou des deux côtés ou symétrique ou asymétrique des sections longitudinales dans la direction d'avance des éléments de support successifs (10a, 10b, ...).

2. Agencement de courroie trapézoïdale selon la revendication 1,
**caractérisé en ce que**
les éléments de support (10a, 10b, ...) sont revêtus dans la direction d'avance, sur les côtés avant (20) et/ou arrière (22) d'éléments stratifiés (24, respectivement 24a, 24b) en matériau de grand amortissement.

3. Agencement de courroie trapézoïdale selon la revendication 1 ou 2,
**caractérisé en ce**
**qu'**on dispose sur la surface partielle supérieure avant (28) un élément stratifié amortissant (24), qui est connecté par engagement positif au corps de base de l'élément de support (10), en ce que deux rehaussements (36) saillant depuis l'élément stratifié (24) sont adaptés dans des renfoncements correspondants (38) du corps de base.

4. Agencement de courroie trapézoïdale selon la revendication 3,
**caractérisé en ce que**
les rehaussements (36) saillant depuis l'élément stratifié (24) et les renfoncements (38) qui leur correspondent dans le corps de base présentent à chaque fois des sections transversales cylindriques ou polygonales.

5. Agencement de courroie trapézoïdale selon l'une quelconque des revendications 2 à 4,
**caractérisé en ce que**
les éléments stratifiés (24, respectivement 24a, 24b) disposés à chaque fois sur les éléments de support (10a, 10b, ...) sont montés par engagement par liaison de matière (collage, vulcanisation) sur au moins l'une des quatre surfaces (28, 30, 32, 34) situées sur les côtés avant (20) et/ou arrière (22) des éléments de support (10a, 10b, ...).
